(19)

**Europäisches Patentamt**
**European Patent Office**
**Office européen des brevets**

(11)    **EP 4 566 765 A1**

(12)    **EUROPEAN PATENT APPLICATION**
published in accordance with Art. 153(4) EPC

(43) Date of publication:
**11.06.2025 Bulletin 2025/24**

(21) Application number: **23872782.0**

(22) Date of filing: **09.08.2023**

(51) International Patent Classification (IPC):
*B25J 9/16* (2006.01)          *B25J 5/00* (2006.01)
*B25J 13/00* (2006.01)         *B25J 13/08* (2006.01)
*B25J 19/02* (2006.01)         *B66B 1/34* (2006.01)

(52) Cooperative Patent Classification (CPC):
**G05D 1/435; B25J 9/16; B66B 1/34; G05D 1/245;**
G05D 2107/60; G05D 2109/10; G05D 2111/52;
G05D 2111/56

(86) International application number:
**PCT/KR2023/011763**

(87) International publication number:
**WO 2024/071659 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 KR 20220125379**

(71) Applicant: **Samsung Electronics Co., Ltd.**
**Suwon-si, Gyeonggi-do 16677 (KR)**

(72) Inventors:
• **MOON, Kyungjin**
  **Suwon-si Gyeonggi-do 16677 (KR)**
• **CHOI, Koeun**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54)    **ROBOT USING ELEVATOR AND CONTROL METHOD THEREOF**

(57)    A robot and a controlling method thereof are provided. The robot according of the present disclosure includes a sensor, a driving unit, a communication interface, memory storing a database including information regarding each floor of a space where the robot is located, and one or more processors. The one or more processors are configured to, based on a user input to move the robot on a first floor to a second floor being received, control the driving unit to allow the robot to board an elevator; and based on communication with the elevator being not possible while the robot is aboard the elevator in response to the user input, identify whether the elevator has arrived at the second elevator based on the database and information obtained through the sensor while the robot is aboard the elevator, and based on identifying that the elevator has arrived at the second floor, control the driving unit to allow the robot to move to exit the elevator. The processor is configured to, based on the elevator where the robot is aboard being stopped, generate a database including the information regarding each floor of the space based on information regarding each floor obtained thorough the sensor and store the database in the memory.

FIG. 1

EP 4 566 765 A1

**Description**

[TECHNICAL FIELD]

The disclosure relates to a robot and a controlling method thereof, and more particularly, to a robot configured to use an elevator based on a sensor, and a controlling method thereof.

[BACKGROUND ART]

Recently, with development of electronic technology, robots are used in various industrial fields. Advances in object recognition technology have enabled robots to accurately distinguish between various objects, and advances in autonomous driving technology have enabled robots to drive stably without interfering with human traffic. Looking at serving robots that serve food ordered by users at restaurants, or guide robots that guide users in airports or large supermarkets, we can see that the fields and methods in which robots are used have diversified.

As robots are used in various fields, the types and sizes of driving spaces in which robots drive have also diversified. Previously, robots could only drive in narrow and limited spaces, but now they can drive in wider and more open spaces. In the case of large buildings with multiple floors, such as large supermarkets and airports, robots can also move between floors within the large building using elevators. In this case, a robot using an elevator can obtain information regarding the stop floor displayed on the elevator through a camera in order to exit at a preset floor, or obtain information regarding the stop floor of the elevator through a communication interface.

[DISCLOSURE]

[TECHNICAL SOLUTION]

A robot according to an embodiment includes a sensor, a driving unit, a communication interface, memory, and one or more processors. The memory stores a database including information regarding each floor of a space where the robot is located. The one or more processors are configured to, based on a user input to move the robot on a first floor to a second floor being received, control the driving unit to allow the robot to board an elevator. The one or more processors, based on communication with the elevator being not possible while the robot is aboard the elevator in response to the user input, identify whether the elevator has arrived at the second elevator based on the database and information obtained through the sensor while the robot is aboard the elevator. The one or more processors are configured to, based on identifying that the elevator has arrived at the second floor, control the driving unit to allow the robot to move to exit the elevator. The one or more processors are configured to, based on the elevator where the robot is aboard being stopped, generate a database including the information regarding each floor of the space based on information regarding each floor obtained thorough the sensor and store the database in the memory.

The sensor may include at least one of a pressure sensor or an acceleration sensor.

The one or more processors may be configured to obtain a pressure of each floor at which the elevator where the robot is aboard has stopped using the pressure sensor, and obtain information regarding a difference in pressure between floors and an altitude of the each floor based on the obtained pressure, and generate the database including the obtained pressure of each floor, difference in pressure between floors and altitude of the each floor.

The one or more processors may be configured to obtain information regarding an inter-floor travel distance of the robot using the acceleration sensor, obtain information regarding an altitude of the each floor based on the obtained information regarding an inter-floor travel distance, and generate the database including the obtained information regarding an altitude of each floor.

The one or more processors may be configured to identify a pressure of the first floor using the pressure sensor while the robot is located on the first floor, based on communication with the elevator being not possible while the robot is aboard the elevator, identify an expected pressure of the second floor based on a difference in pressure between floors included in the database and the identified pressure of the first floor, based on the elevator being moved and stopped, identify a pressure of a floor at which the elevator has stopped using the pressure sensor, and identify whether the elevator has arrived at the second floor based on the identified expected pressure of the second floor and the identified pressure of the stop floor.

The one or more processors may be configure to identify a pressure of the first floor using the pressure sensor while the robot is located on the first floor, based on communication with the elevator being not possible while the robot is aboard the elevator, in response to the elevator being moved and stopped, identify a pressure of a floor at which the elevator has stopped using the pressure sensor, identify an altitude of the stop floor based on the identified pressure of the stop floor, and identify whether the elevator has arrived at the second floor based on the identified altitude and information regarding an altitude of each floor included in the database.

The one or more processors may be configured to, based on communication with the elevator being not possible while the robot is aboard the elevator, in response to the elevator being moved and stopped, identify an inter-floor travel distance between the first floor and a floor at which the elevator has stopped using the acceleration sensor, identify an altitude of the stop floor based on the identified inter-floor travel distance, and identify whether the elevator has arrived at the second floor based on the identified altitude and information regarding an altitude of each floor included in the database.

The sensor may include a pressure sensor, and the one or more processors may be configured to, based on identifying that the elevator has arrived at the second floor, identify a pressure within the elevator using the pressure sensor, and based on a pressure identified at a second point in time being less than a pressure identified at a first point in time prior to the second point in time by a preset value, identify that a door of the elevator is opened at the second point in time.

A controlling method of a robot located within a space consisting of a plurality of floors according to an embodiment includes generating a database including information regarding each floor of a space based on information regarding each floor obtained through a sensor of a robot and storing the database in memory of the robot. The controlling method includes controlling a driving unit of the robot to move through the space based on the database stored in the memory. The controlling a driving unit includes, based on a user input to move the robot on a first floor to a second floor being received, controlling the driving unit to allow the elevator to board an elevator. The controlling a driving unit includes identifying whether communication with the elevator is possible while the robot is aboard the elevator in response to the user input. The controlling a driving unit includes, based on identifying that communication with the elevator is not possible, identifying whether the elevator has arrived at the second elevator based on the database and information obtained through the sensor while the robot is aboard the elevator. The controlling a driving unit includes, based on identifying that the elevator has arrived at the second floor, controlling the driving unit to allow the robot to move to exit the elevator.

The sensor may include at least one of a pressure sensor or an acceleration sensor.

The storing may include obtaining a pressure of each floor at which the elevator where the robot is aboard has stopped using the pressure sensor, and obtaining information regarding a difference in pressure between floors and an altitude of the each floor based on the obtained pressure, and generating a database including the obtained pressure of each floor, difference in pressure between floors and altitude of the each floor.

The storing may include obtaining information regarding an inter-floor travel distance of the robot using the acceleration sensor, obtaining information regarding an altitude of the each floor based on the obtained information regarding an inter-floor travel distance, and generating the database including the obtained information regarding an altitude of each floor.

The controlling method may further include identifying a pressure of the first floor using the pressure sensor while the robot is located on the first floor. The identifying whether the elevator has arrived at the second floor may include, based on communication with the elevator being not possible while the robot is aboard the elevator, identifying an expected pressure of the second floor based on a difference in pressure between floors included in the database and the identified pressure of the first floor, based on the elevator being moved and stopped, identifying a pressure of a floor at which the elevator has stopped using the pressure sensor, and identifying whether the elevator has arrived at the second floor based on the identified expected pressure of the second floor and the identified pressure of the stop floor.

The controlling method may further include identifying a pressure of the first floor using the pressure sensor while the robot is located on the first floor. The identifying whether the elevator has arrived at the second floor may include, based on communication with the elevator being not possible while the robot is aboard an elevator, in response to the elevator being moved and stopped, identifying a pressure of a floor at which the elevator has stopped using the pressure sensor, identifying an altitude of the stop floor based on the identified pressure of the stop floor, and identifying whether the elevator has arrived at the second floor based on the identified altitude and information regarding an altitude of each floor included in the database.

The identifying whether the elevator has arrived at the second floor in the controlling method may further include, based on communication with the elevator being not possible while the robot is aboard the elevator, in response to the elevator being moved and stopped, identifying an inter-floor travel distance between the first floor and a floor at which the elevator has stopped using the acceleration sensor, identifying an altitude of the stop floor based on the identified inter-floor travel distance, and identifying whether the elevator has arrived at the second floor based on the identified altitude and information regarding an altitude of each floor included in the database.

The controlling method may further include, based on identifying that the elevator has arrived at the second floor, identifying a pressure within the elevator using a pressure sensor included in the sensor, and based on a pressure identified at a second point in time being less than a pressure identified at a first point in time prior to the second point in time by a preset value, identifying that a door of the elevator is opened at the second point in time.

[DESCRIPTION OF DRAWINGS]

FIG. 1 is an exemplary view illustrating a robot using an elevator;
FIG. 2 is a schematic view illustrating a robot according to an embodiment;
FIG. 3 is an exemplary view illustrating generating a database including information regarding each floor using a sensor according to an embodiment;

FIG. 4 is an exemplary view illustrating generating a database including information regarding each floor and storing the database in memory according to an embodiment;

FIG. 5 is an exemplary view illustrating identifying an expected pressure of a second floor based on a pressure of a first floor according to an embodiment;

FIG. 6 is an exemplary view illustrating identifying whether an elevator has arrived at a second floor based on the expected pressure of the second floor identified in FIG. 5 according to an embodiment;

FIG. 7 is an exemplary view illustrating updating a database based on a pressure of a first floor according to an embodiment;

FIG. 8 is an exemplary view illustrating identifying whether an elevator has arrived at a second floor using an acceleration sensor according to an embodiment;

FIG. 9 is a detailed block diagram illustrating a robot according to an embodiment; and

FIG. 10 is a flowchart schematically illustrating a method for controlling a robot in a space consisting of a plurality of floors according to an embodiment.

[DETAILED DESCRIPTION OF EMBODIMENTS]

The embodiments of the present disclosure may be modified in various ways, and may have various embodiments, so specific embodiments are illustrated in the drawings and described in detail in the detailed description. However, it is to be understood that the disclosure is not limited to specific exemplary embodiments, but include all modifications, equivalents, and/or alternatives according to exemplary embodiments of the disclosure. Throughout the description of the accompanying drawings, similar components may be denoted by similar reference numerals.

In describing the disclosure, when it is decided that a detailed description for the known functions or configurations related to the disclosure may unnecessarily obscure the gist of the disclosure, the detailed description therefor will be omitted.

The following exemplary embodiments may be modified in several different forms, and the scope of the technical spirit of the disclosure is not limited to the following exemplary embodiments. Rather, these exemplary embodiments make the disclosure thorough and complete, and are provided to completely transfer the spirit of the disclosure to those skilled in the art.

Terms used in the disclosure are used only to describe specific exemplary embodiments rather than limiting the scope of the disclosure. Singular forms are intended to include plural forms unless the context clearly indicates otherwise.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

On the other hand, when an element (e.g., a first element) is referred to as being "directly coupled with/to" or "directly connected to" another element (e.g., a second element), it should be understood that there is no intervening element (e.g., a third element) in-between.

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware.

Instead, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

In exemplary embodiments, a 'module' or a '~er' may perform at least one function or operation, and be implemented as hardware or software or be implemented as a combination of hardware and software. In addition, a plurality of 'modules' or a plurality of '~er' may be integrated into at least one module and be implemented as at least one processor except for a 'module' or a '~er' that needs to be implemented as specific hardware.

Various elements and regions in the drawings are schematically drawn in the drawings. The technical concept of the disclosure is not limited by a relative size or spacing drawn in the accompanying drawings.

Hereinafter, an embodiment according to the present disclosure will be described in detail with reference to the accompanying drawings so that a person with ordinary knowledge in the technical field to which the present disclosure belongs can easily implement the present disclosure.

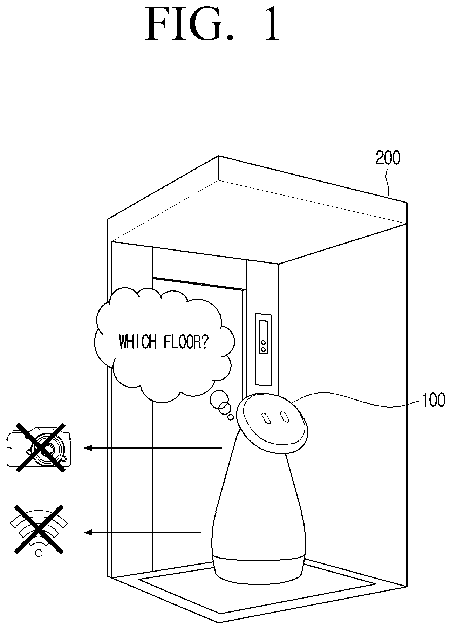

FIG. 1 is an exemplary view illustrating a robot using an elevator.

In a space 1000 consisting of a plurality of floors (e.g., a building, a supermarket, an airport, etc.), a robot 100 may use an elevator 200 to travel between floors. In this case, the robot 100 aboard an elevator 200 may perform communication with the elevator 200 to obtain information regarding the floor to which the elevator 200 has arrived, so that the robot 100 may exit at the exact floor set for the robot 100 to exit. The robot 100 aboard the elevator 200 may use a camera to obtain information regarding the arrival floor of the elevator 200 displayed on a display 160 of the elevator 200, so that the robot 100 can exit at the exact floor set for the robot 100 to exit.

However, as shown in FIG. 1, in the case of obtaining information regarding the arrival floor of the elevator 200 through communication with the elevator 200 or obtaining information regarding the arrival floor of the elevator 200 through a camera, the robot 100 may not exit at a preset drop-off floor. For example, when communication between the robot 100 and the elevator 200 is cut off, the robot 100 may not be able to obtain information regarding the arrival floor of the elevator 200. When a plurality of people are aboard the elevator 200, the robot 100 may not be able to obtain information regarding the drop-off floor displayed on the display 160 of the elevator 200 as the display 160 of the elevator 200 is obscured by the plurality of people. Therefore, there is a need for a method for the robot 100 to accurately recognize the arrival floor of the elevator 200 without communicating with the elevator 200 or using a camera.

Accordingly, the robot 100 according to an embodiment obtains information regarding each floor in the space 1000 where the robot 100 is located using a sensor 110, and generates a database 10 including information regarding each floor based on the obtained information. Subsequently, based on the generated database 10, the robot 100 accurately recognizes the arrival floor of the elevator 200 without communicating with the elevator 200 or using a camera. Hereinafter, an embodiment of the present disclosure will be described in detail in this regard.

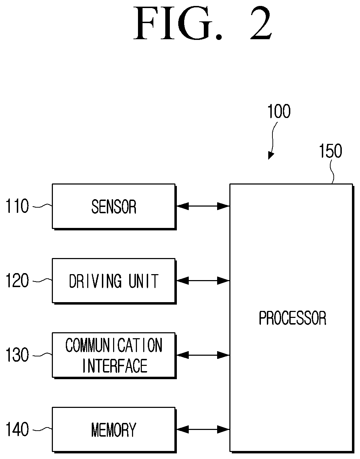

FIG. 2 is a schematic view illustrating a robot according to an embodiment.

The robot 100 includes the sensor 110, a driving unit 120, a communication interface 130, memory 140, and one or more processors 150.

The sensor 110 is configured to obtain information regarding the acceleration of the robot 100 or the surrounding environment of the robot 100. To this end, according to an embodiment, the sensor 110 may include at least one of a pressure sensor and an acceleration sensor. The sensor 110 including the pressure sensor may measure the pressure of the environment surrounding the robot 100. In this case, the pressure of the environment surrounding the robot 100 may be different for each floor within the space 1000 consisting of a plurality of floors in which the robot 100 is located. The sensor 110 including an acceleration sensor may measure the acceleration of the robot 100. In this case, when the elevator 200 is operating while the robot 100 is aboard the elevator 200, the acceleration sensor may measure the acceleration of the elevator 200 as the acceleration of the robot 100.

The driving unit 120 is configured to drive the robot 100. The driving unit 120 may adjust the driving direction and driving speed of the robot 100 under the control of the processor 150. In one example, the driving unit 120 may control various driving operations of the robot 100, such as moving, stopping, controlling speed, and changing direction. The driving unit 120 according to an embodiment may be implemented as wheels or legs of the robot 100. To this end, the driving unit 120 may include a power generation device (e.g., a gasoline engine, a diesel engine, a liquefied petroleum gas (LPG) engine, an electric motor, etc., depending on the fuel (or energy source) used) that generates power for driving the robot 100, and a steering device (e.g., manual steering, hydraulics steering, electronic control power steering; EPS), etc.) for controlling the driving direction.

The communication interface 130 includes circuitry and is configured to perform communication between the robot 100 and an external device, and the communication interface 130 may receive various data or information from the external device and may transmit various data or information to the external device.

To this end, the communicator 130 may include at least one of a Wi-Fi module, a Bluetooth module, a wireless communication module, an NFC module, or a Ultra-Wide Band (UWB) module. Each of the Wi-Fi module and Bluetooth module may perform communication using a Wi-Fi method and a Bluetooth method, respectively. When using a Wi-Fi module or a Bluetooth module, various connection information such as SSID is first transmitted and received, and various information may be transmitted and received after establishing a communication connection using the same.

The wireless communication module may perform communication according to various communication standards such as IEEE, Zigbee, 3rd Generation (3G), 3rd Generation Partnership Project (3GPP), Long Term Evolution (LTE), 5th Generation (5G), etc. The NFC module may perform communication in a Near Field Communication (NFC) communication method using a band of 13.56MHz among various RF-ID frequency bands such as 135kHz, 13.56MHz, 433MHz, 860~960MHz, 2.45GHz, etc.

According to an embodiment, the communication interface 130 may perform communication with the elevator 200 (or a communication interface of the elevator 200) to receive information regarding the elevator 200. In one example, the communication interface 130 may receive information regarding the floor at which the elevator 200 has stopped (hereinafter, referred to as 'stop floor'). This allows the robot 100 to identify at which floor the elevator 200 has stopped on within the space 1000 consisting of a plurality of floors where the robot 100 is located. In addition, the communication interface 130 may receive various information from the elevator 200, such as information regarding the load on the elevator 200.

The memory 140 may store at least one instruction regarding the robot 100. In addition, the memory 140 may store an operating system (O/S) for operating the robot 100. The memory 140 may also store various software programs or applications for operating the robot 100 according to various embodiments of the present disclosure. In addition, the memory 140 may include a semiconductor memory such as a flash memory or magnetic storage media such as a hard disk, or the like.

Specifically, the memory 140 may store various software modules for operating the robot 100 according to various embodiments of the present disclosure, and the processor 150 may control the operation of the robot 100 by executing various software modules stored in the memory 140. In other words, the memory 140 may be accessed by the processor 150, and the data may be read/written/modified/deleted/updated, etc. by the processor 150.

Meanwhile, the term 'memory 140' in this disclosure may be used to include the memory 140, ROM or RAM in the processor 150, or a memory 140 card (e.g., micro SD card, memory stick) mounted in the robot 100.

Meanwhile, according to an embodiment, the memory 140 may store the database 10 including information regarding each floor of the space 1000 where the robot 100 is located. Here, the database 10 including information regarding each floor may be a set of data for each floor (sub space) of the space 1000 (main space) where the robot 100 is located. In addition, the information regarding each floor is information for identifying the space 1000 in each floor where the robot 100 is located, and may include the pressure, altitude, etc. of the space 1000 in each floor. In one example, when the robot 100 is located in a building consisting of a plurality of floors, the database 10 may include data regarding the pressure, etc. of the space 1000 on each floor of the building.

In addition, the memory 140 may store map data of the space 1000 in which the robot 100 is located. For example, when the space 1000 in which the robot 100 is located consists of a plurality of floors, the memory 140 may store a plurality of map data corresponding to each of the plurality of floors.

The one or more processors control the overall operations of the robot 100. Specifically, the processor 150 is connected to the configurations of the robot 100 including the sensor 110, the driving unit 120, the communication interface 130, and the memory 140, and as described above, by executing at least one instruction stored in the memory 140, may control the overall operations of the robot 100.

To this end, the one or more processors 150 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 150 may control one or any combination of the other components of the robot 100, and may perform communication-related operations or data processing. The one or more processors 150 may execute one or more programs or instructions stored in memory 140. For example, the one or more processors 150 may perform a controlling method of the robot 100 according to an embodiment by executing one or more instructions stored in the memory 140.

When a method according to an embodiment includes a plurality of operations, the plurality of operations may be performed by one processor 150 or by a plurality of processors 150. For example, when a first operation, a second operation, and a third operation are performed by the method according to an embodiment, all of the first operation, the second operation, and the third operation may be performed by the first processor 150, or the first operation and the second operation may be performed by the first processor 150 (e.g., a general-purpose processor) and the third operation may be performed by the second processor 150 (e.g., an artificial intelligence-dedicated processor).

The one or more processors 150 may be implemented as a single core processor 150 including a single core, or as one or more multicore processors including a plurality of cores (e.g., homogeneous multicore or heterogeneous multicore). When the one or more processors 150 are implemented as a multicore processor 150, each of the plurality of cores included in the multicore processor 150 may include an internal memory 140 of the processor 150, such as a cache memory 140 and an on-chip memory 140, and a common cache shared by the plurality of cores may be included in the multicore processor 150. Each of the plurality of cores (or some of the plurality of cores) included in the multi-core processor 150 may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor 150, or may be performed by a plurality of cores. For example, when a first operation, a second operation, and a third operation are performed by a method according to an embodiment, all of the first operation, the second operation, and the third operation may be performed by the first core included in the multi-core processor 150, or the first operation and the second operation may be performed by the first core included in the multi-core processor 150 and the third operation may be performed by the second core included in the multi-core processor 150.

In the embodiments of the present disclosure, the processor 150 may mean a system-on-chip (SoC) in which one or more processors 150 and other electronic components are integrated, a single-core processor 150, a multi-core processor 150, or a core included in a single-core processor 150 or multi-core processor 150, and here, the core may be implemented as CPU, GPU, APU, MIC, DSP, NPU, hardware accelerator, or machine learning accelerator, etc., but the core is not limited to the embodiments of the present disclosure.

Hereinafter, for convenience of explanation, one or more processors 150 will be referred to as the processor 150.

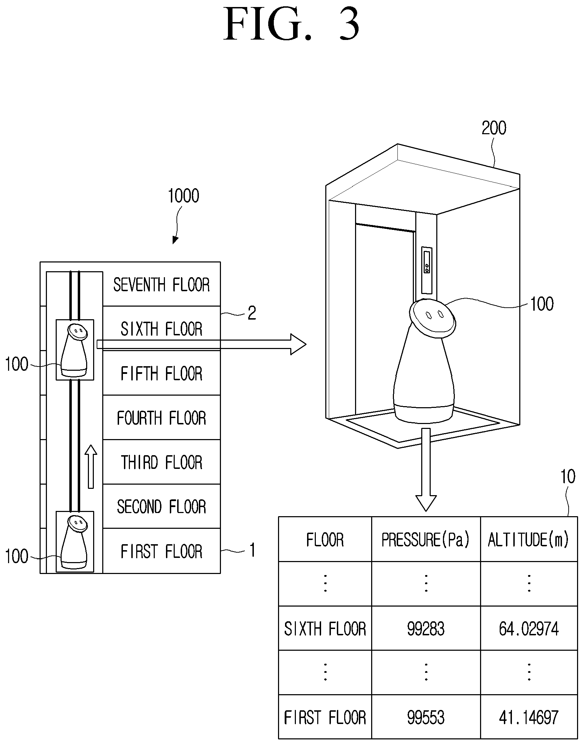

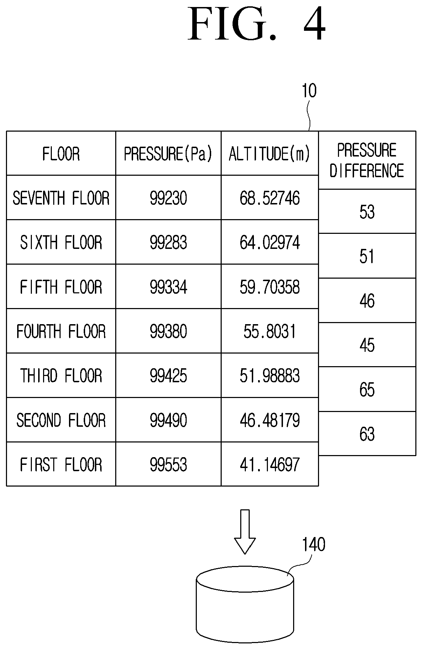

In various embodiments according to the present disclosure, the processor 150 may control the robot 100 such that the robot 100 can accurately exit the elevator at a preset drop-off floor without the use of a camera and the communication interface 130. In particular, the processor 150 may exactly identify whether the floor where the elevator 200 stopped (or arrived) corresponds to the preset drop-off floor. Hereinafter, the method of generating the database 10 according to an embodiment will be described with reference to FIGS. 3 and 4, followed by various embodiments in which the robot 100 gets off the elevator 200 under the control of the processor 150.

FIG. 3 is an exemplary view illustrating generating a database including information regarding each floor using a sensor according to an embodiment.

FIG. 4 is an exemplary view illustrating generating a database including information regarding each floor and storing the database in memory according to an embodiment.

Meanwhile, in this specification, the term 'stop floor' is intended to refer to a floor at which the elevator 200 is stopped. The term 'boarding floor' is intended to refer to a floor at which the robot 100 was located prior to boarding the elevator 200. In addition, and the term 'drop-off floor' is intended to refer to another floor within the space 1000 to which the robot 100, which was located on the 'boarding floor,' is set to move according to a user command. Specifically, when the robot 100 on the 'boarding floor' receives a user input requesting to move to another floor, the robot 100 may set the another floor as the 'drop-off floor,' board the elevator 200 on the 'boarding floor' and exit at the 'drop-off floor.'

According to an embodiment, when the elevator 200 where the robot 100 is aboard is stopped, the processor 150 may generate and store in the memory 140 the database 10 that includes information regarding each floor of the space 1000 based on information regarding each floor obtained through the sensor 110.

Specifically, the processor 150 may perform an operation to generate the database 10 including information regarding each floor of the space 1000 where the robot 100 is located. The processor 150 may receive information regarding the floor where the elevator 200 stopped through the communication interface 130 every time the robot 100 boards the elevator 200 and the elevator 200 stops. In addition, the processor 150 may obtain information regarding the floor where the elevator 200 stopped through the sensor 110.

According to an embodiment, the processor 150 may obtain the pressure of each floor at which the elevator 200 where the robot 100 is aboard stops using a pressure sensor, obtain information regarding a difference in pressure between floors and altitude of each floor based on the obtained pressure, and generate the database 10 including information regarding the obtained pressure of each floor, difference in pressure between floors and altitude of each floor.

Specifically, the processor 150 may use a pressure sensor to measure the pressure of the floor at which the elevator 200 has stopped. Referring to FIG. 3, when the robot 100, which is located on the first floor of a building, moves to the sixth floor according to a user command, the processor 150 may control the driving unit 120 to allow the robot 100 to board the elevator 200. Subsequently, while the robot 100 is aboard the elevator 200, the processor 150 may receive information from the elevator 200 via the communication interface 130 indicating that the elevator 200 has stopped at the sixth floor after operation (or indicating that the robot 100 has arrived at the sixth floor). When it is identified that the elevator 200 has stopped at the sixth floor, the processor 150 may measure the pressure of the sixth floor using a pressure sensor. When the pressure of the sixth floor is measured to be 99283Pa based on the pressure sensor, the processor 150 may match the measured pressure of 99283Pa to the sixth floor and store it in the database 10.

Meanwhile, the processor 150 may use a pressure sensor to measure the altitude of the floor at which the elevator 200 has stopped. Specifically, the processor 150 may use a pressure sensor to measure the pressure of the floor at which the elevator 200 has stopped, and identify the altitude of the floor at which the elevator 200 has stopped based on the pressure. In one example, the processor 150 may measure the altitude of the floor at which the elevator 200 has stopped using the following equation.

$$\text{Altitude of floor} = 43300 \times (1 - \frac{P}{P_0})^{\frac{1}{5.255}}$$

Here, P is the pressure of each floor measured by the pressure sensor, and $P_0$ is the sea level pressure.

As such, the processor 150 may measure the altitude for each floor based on the pressure of each floor obtained through the pressure sensor. Referring back to FIG. 3, when the pressure of the sixth floor is measured to be 99283Pa based on the pressure sensor, the processor 150 may identify the altitude of the sixth floor based on 99283Pa. When the altitude of the sixth floor is identified as 64.02974m, the processor 150 may match the altitude of 64.02974m to the sixth floor and store it in the database 10.

Further, according to an embodiment, the processor 150 may obtain information regarding an inter-floor travel distance of the robot 100 using an acceleration sensor, obtain information regarding the altitude of each floor based on the obtained travel distance between floors, and generate the database 10 including the obtained information regarding the altitude of each floor.

Specifically, the processor 150 may use an acceleration sensor to obtain information regarding the floor at which the elevator 200 has stopped. Referring back to FIG. 3, when the processor 150 receives a user input requesting that the robot 100, which is located on the first floor of a building, travel to the sixth floor of the building, the processor 150 may control the driving unit 120 to allow the robot 100 to board the elevator 200. While the robot 100 is aboard the elevator 200, the processor 150 may receive information from the elevator 200 via the communication interface 130 indicating that the elevator 200 has stopped at the sixth floor after operation (or indicating that the elevator 200 has arrived at the sixth floor). In this case, when it is identified that the elevator 200 has stopped at the sixth floor, the processor 150 may identify the travel distance of the robot 100 after the robot 100 boarded the elevator 200, i.e., the distance traveled by the elevator 200 from the time when the elevator 200 starts operating to the time when the elevator 200 stopped at the sixth floor. Specifically, the processor 150 may use the acceleration sensor to detect the time when the elevator 200 starts operating after the robot 100 boarded the elevator 200. After detecting the time when the elevator 200 starts operating, the processor 150 may identify the amount of change in acceleration of the robot 100 using the acceleration sensor to the time when it receives information from the elevator 200 indicating that it has stopped at the sixth floor. Through this, the processor 150 may identify the altitude of the sixth floor based on the travel distance of the elevator 200 from the first floor to the sixth floor and the travel distance.

As such, the processor 150 may use the sensor 110 to obtain information regarding each floor within the space 1000 where the robot 100 is located. In particular, when obtaining the relevant information, the processor 150 may receive from the elevator 200 information regarding the floor at which the elevator 200 has stopped or the floor at which the elevator 200 has arrived, and generate the database 10 including information regarding each floor by matching the received information regarding the floor and the relevant information obtained through the sensor 110. The database 10 generated as described above may be stored in the memory 140. Referring to FIG. 4, when the robot 100 is located in a building consisting of seven floors, the processor 150 may generate the database 10 that matches relevant information regarding each floor (more specifically, the pressure and altitude of each floor, pressure difference between floors, etc.) to each floor and store the database 10 in the memory 140. After storing the generated database 10 in the memory 140, the processor 150 may identify at which floor the elevator 200 has stopped without the use of the communication interface 130 and a camera.

Hereinafter, an embodiment in which the processor 150 identifies the floor at which the elevator 200 has stopped (or arrived) based on the database 10 stored in the memory 140 will be described.

According to an embodiment, when a user input to move the robot 100 located on the first floor to the second floor is received, the processor 150 controls the driving unit 120 to allow the robot 100 to board the elevator 200.

Here, the first floor refers to the boarding floor where the robot 100 receiving the user input is located, and the second floor refers to drop-off floor to which the robot 100 is set to move based on the user input. The processor 150 may receive the user input to move the robot 100 to the second floor via the communication interface 130 or the input interface 170.

In this case, the processor 150 may also receive information regarding the floor where the robot 100 is located together with the user input. Specifically, the processor 150 may identify, through the user input, the floor where the robot 100 is located from among a plurality of floors in the space 1000 where the robot 100 is located. Subsequently, the processor 150 may obtain map data corresponding to the floor where the robot 100 is located from the map data for each floor stored in the memory 140, and may identify the location of the elevator 200 on the floor where the robot 100 is located based on the obtained map data. Then, the processor 150 may control the driving unit 120 to move the robot 100 to the identified location of the elevator 200.

In one example, when receiving a user input indicating that the robot 100 is located on the first floor together with a user input requesting the robot 100 to move to the sixth floor via the input interface 170, the processor 150 may obtain map data corresponding to the first floor from the memory 140 from among a plurality of map data corresponding to each of a plurality of floors stored. The processor 150 may then obtain information regarding objects, environments, etc. surrounding the robot 100 via the sensor 110. To this end, the sensor 110 may include a lidar sensor, a time of flight (ToF) sensor, and the like. The processor 150 may identify the location of the robot 100 on the map data corresponding to the first floor based on the obtained information regarding objects, environments, etc. surrounding the robot 100. The processor 150 may identify the location of the elevator 200 on the first floor based on the map data corresponding to the first floor. Subsequently, the processor 150 may control the driving unit 120 to move the robot 100 to the identified location of the elevator 200.

Meanwhile, according to an embodiment, the processor 150 may obtain, via the database 10 stored in the memory 140, the floor where the robot 100 is located and the map data corresponding to the floor where the robot 100 is located. In one example, the processor 150 may identify the pressure of the floor where the robot 100 is located using a pressure sensor. Referring to FIG. 4, when the pressure measured by the robot 100 using a pressure sensor is 99380Pa, the processor 150 may identify that the robot 100 is located on the fourth floor. In this case, the processor 150 may obtain map data corresponding to the fourth floor from the memory 140 and identify the location of the robot 100 and the location of the elevator 200 on the obtained map data corresponding to the fourth floor.

Meanwhile, the processor 150 may control the driving unit 120 to move the robot 100 to the elevator 200 located on the first floor and then control the driving unit 120 to allow the robot to board the elevator 200. Specifically, when the robot 100 arrives within an area where the elevator 200 located on the first floor is located (e.g., a waiting area for the robot 100 established around the elevator 200) based on the map data, the processor 150 may control the driving unit 120 to allow the robot 100 to stop. The processor 150 may then identify that the elevator 200 has arrived at the first floor where the robot 100 is located via the sensor 110 (e.g., lidar sensor, ToF sensor, etc.), a camera, the communication interface 130, etc. When it is identified that the elevator 200 has arrived at the first floor, the processor 150 may control the driving unit 120 to allow the robot 100 to board the elevator 200. Subsequently, when it is identified that the robot 100 has boarded the elevator 200, the processor 150 may again control the driving unit 120 to allow the robot 100 to stop within the elevator 200.

Meanwhile, the processor 150 may input information regarding the second floor via an input interface (e.g., button, etc.) disposed within the elevator 200 using a manipulator (not shown). In one example, the processor 150 may use the manipulator (not shown) to manipulate a button corresponding to the second floor from among a plurality of buttons disposed on one side of the interior of the elevator 200 to set the second floor as the stop floor of the elevator 200.

In addition, according to an embodiment, when it is not possible for the robot 100 to perform communication with the elevator 200 while the robot 100 is aboard the elevator 200 according to a user input, the processor 150 identifies whether the elevator 200 has arrived at the second floor based on the database 10 and information obtained through the sensor 110 while the robot 100 is aboard the elevator 200.

Specifically, the processor 150 may identify whether the robot 100 can perform communication with the elevator 200 while aboard the elevator 200. Specifically, the processor 150 may receive data from the elevator 200 at a preset interval via the communication interface 130. In this case, when no data is received from the elevator 200 while the robot 100 is aboard the elevator 200 or when the number of times no data is received from the elevator 200 exceeds the preset number of times, the processor 150 may identify that communication with the elevator 200 is not possible via the communication interface 130. For example, when the robot 100 and the elevator 200 perform Bluetooth communication via the communication interface 130, the processor 150 may identify that the Bluetooth connection is cut off if the processor 150 has not received a "Connection Request" from the elevator 200 for a preset period of time after transmitting an "Advertising Signal" to the elevator 200 via the communication interface 130. Subsequently, the processor 150 may identify that communication with the elevator 200 is not possible.

Meanwhile, although it has been that the processor 150 identifies whether communication between the robot 100 and the elevator 200 is possible, the processor 150 may also receive information regarding the elevator 200 (e.g., information of the stop floor of the elevator 200, etc.) from a control server of the elevator 200. In this case, the processor 150 may identify whether communication with the control server of the elevator 200 is not possible via the communication interface 130.

Meanwhile, when it is identified that communication with the elevator 200 is not possible via the communication interface 130 while the robot 100 is aboard the elevator, the processor 150 identifies whether the elevator 200 has arrived at the second floor based on the database 10 stored in the memory 140 and the information obtained through the sensor 110.

Specifically, the processor 150 may obtain information regarding the robot 100 and the environment surrounding the robot 100 via the sensor 110 while the robot 100 is aboard the elevator 200. In one example, the processor 150 may measure the pressure around the robot 100 using a pressure sensor while the robot 100 is aboard the elevator 200. In this case, the pressure around the robot 100 obtained using the pressure sensor may change as the elevator 200 moves. In other words, when the elevator 200 ascends while the robot 100 is aboard the elevator 200, the pressure obtained using the pressure sensor will gradually decrease. On the other hand, when the elevator 200 descends while the robot 100 is aboard the elevator 200, the pressure obtained using the pressure sensor will gradually increase. As such, the processor 150 may identify the operation state of the elevator 200 where the robot 100 is aboard based on the pressure obtained using the pressure sensor or the amount of change in pressure.

In this case, when the pressure corresponding to the second floor to which the robot 100 is set to travel in response to a user input matches the pressure obtained via the pressure sensor matches based on the database 10, the processor 150 may identify that the elevator 200 has arrived at the second floor. Alternatively, when the altitude corresponding to the second floor to which the robot 100 is set to travel in response to a user input matches the altitude identified based on the pressure obtained via the barometric pressure sensor based on the database 10, the processor 150 may identify the elevator 200 has arrived at the second floor.

The processor 150 may also measure the acceleration of the robot 100 via an acceleration sensor while the robot 100 is aboard the elevator 200. In this case, after the robot 100 boards the elevator 200 at the first floor, the processor 150 may identify the amount of change in acceleration from the time when the elevator 200 starts moving to the time when the elevator 200 stops using the acceleration sensor. Subsequently, the processor 150 may identify a travel distance by the elevator 200 based on the identified amount of change in acceleration. In this case, when the identified travel distance matches the distance from the first floor to the second floor, the processor 150 may identify that the elevator 200 has arrived at the second floor.

Meanwhile, although it has been described in the above embodiment that the processor 150 selectively uses the pressure sensor and the acceleration sensor, the processor 150 may use the pressure sensor and the acceleration sensor together to identify whether the elevator 200 has arrived at the second floor.

Hereinafter, an embodiment for identifying whether the elevator 200 has arrived at the second floor after departing from the first floor using the pressure sensor and the acceleration sensor will be described in greater detail.

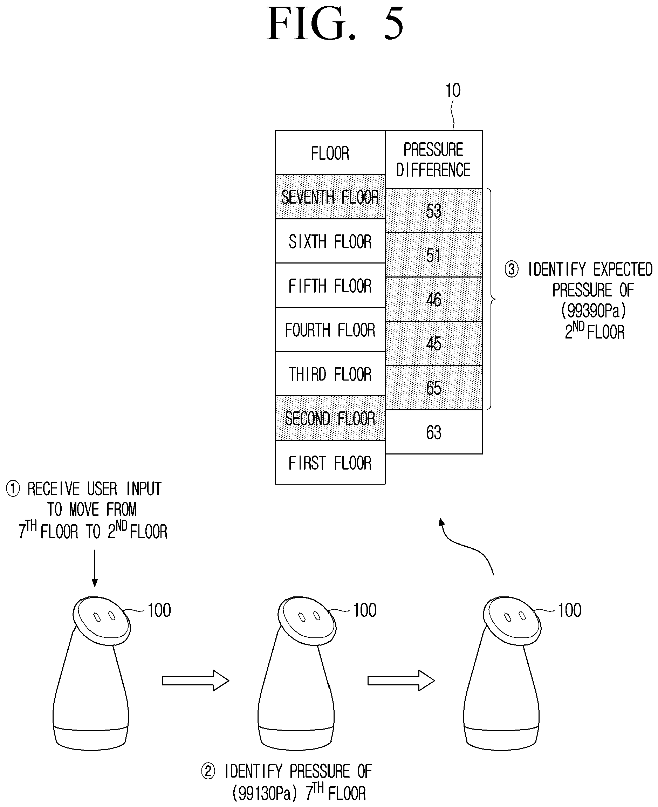

FIG. 5 is an exemplary view illustrating identifying an expected pressure of a second floor based on a pressure of a first floor according to an embodiment.

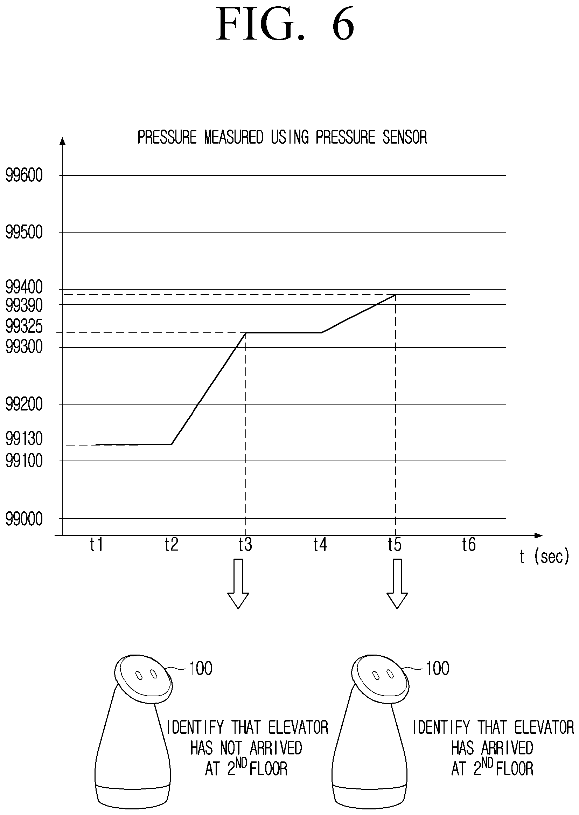

FIG. 6 is an exemplary view illustrating identifying whether an elevator has arrived at a second floor based on the expected pressure of the second floor identified in FIG. 5 according to an embodiment.

According to an embodiment, the processor 150 may identify the pressure of the first floor using the pressure sensor while the robot 100 is located on the first floor. Subsequently, when communication with the elevator 200 is not possible while the robot 100 is aboard the elevator 200, the processor 150 may identify the expected pressure of the second floor based on a difference in pressure between floors included in the database 10 and the identified pressure of the first floor, and when the elevator 200 starts moving and stops, may identify the pressure of the floor at which the elevator 200 stopped using the pressure sensor. Then, the processor 150 may identify whether the elevator 200 has arrived at the second floor based on the identified expected pressure of the second floor and the identified pressure of the stop floor.

Specifically, when using the pressure sensor, the processor 150 may identify the pressure of the first floor using the pressure sensor prior to the robot 100 boarding the elevator 200 on the first floor or prior to the elevator 200 operating after the robot 100 boarding the elevator 200 on the first floor. In this case, the pressure of the first floor identified by the pressure sensor may vary depending on time or occasion. This applies not only to the first floor but also to the pressure identified on other floors within the space 1000 where the robot 100 is located. However, although the pressure for each floor may vary depending on time or occasion, the pressure difference between floors may be constant. Therefore, when it is identified that communication with the elevator 200 is not possible while the robot 100 is aboard the elevator 200, after identifying the pressure of the first floor, the processor 150 may identify the expected pressure of the second floor based on the pressure difference between floors included in the database 10.

Referring to FIG. 5, when the robot 100 located on the seventh floor moves to the second floor in response to a user input, the robot 100 may identify the pressure of the seventh floor using the pressure sensor. In this case, when the pressure of the seventh floor is identified as 99130Pa, the processor 150 may identify the expected pressure of the second floor based on the identified pressure on the seventh floor and the difference in pressure between the seventh floor and the second floor included in the database 10. In other words, the processor 150 may identify the expected pressure of the second floor as 99390Pa.

Further, when the elevator 200 stops after traveling while the robot 100 is aboard the elevator 200, the processor 150 may identify the pressure of the floor at which the elevator 200 stopped using the pressure sensor. Specifically, when the pressure identified using the pressure sensor is maintained within a preset range for a preset time or when the amount of change in pressure is within a preset range, the processor 150 may identify that the elevator 200 has stopped. In one example, the processor 150 may identify that the elevator 200 has stopped when the pressure identified using the pressure sensor is maintained for a preset time. When the processor 150 identifies that the elevator 200 has stopped, the processor 150 may identify the pressure obtained using the pressure sensor as the pressure of the floor at which the elevator 200 stopped. In this case, when the pressure of the stop floor matches the expected pressure of the second floor or is within a preset error range, the processor 150 may identify that the elevator 200 has arrived at the second floor.

Referring to FIGS. 5 and 6, when the expected pressure of the second floor is identified as 99390Pa, the processor 150 may identify in real time the pressure obtained using the pressure sensor while the robot 100 is aboard the elevator 200. The processor 150 may identify that the elevator 200 stopped at time t3. The processor 150 may then compare the pressure of 99325Pa identified at time t3 to the expected pressure of second floor, 99390Pa. Since the pressure of 99325Pa identified at time t3 and the expected pressure of the second floor, 99390Pa, are different from each other, the processor 150 may identify that the elevator 200 has not arrived at the second floor. Subsequently, as the pressure obtained using the pressure sensor changes, the processor 150 may identify that the elevator 200 moves again at time t4 and the elevator 200 stops again at time t5. The processor 150 may then compare the pressure of 99390Pa identified at time t5 to the expected pressure of the second floor, 99390Pa. In this case, since the pressure of 99390Pa identified at time t5 matches the expected pressure of the second floor, 99390Pa, the processor 150 may identify that the elevator 200 has arrived at the second floor. As such, the processor 150 may identify that the elevator 200 has arrived at the drop-off floor set for the robot 100 using only the pressure sensor.

Further, according to an embodiment, when communication with the elevator 200 is not possible while the robot 100 is aboard the elevator 200, if the elevator 200 has moved and stopped, the processor 150 may identify the pressure of the floor at which the elevator 200 has stopped, and may identify the altitude of the stop floor based on the identified pressure of the stop floor. Subsequently, the processor 150 may identify whether the elevator 200 has arrived at the second floor based on the identified altitude and information regarding the altitude of each floor included in the database 10.

In other words, the processor 150 may identify whether the elevator 200 has arrived at the second floor based on the altitude identified by the pressure. Specifically, whenever the elevator 200 stops, the processor 150 may identify the pressure of the stop floor using the pressure sensor, and may identify the altitude of the stop floor using the identified pressure of the stop floor. The processor 150 may then compare the altitude of the identified stop floor to the altitude of the second floor included in the database 10. In this case, when the altitude of the identified stop floor matches the altitude of the second floor included in the database 10 or is within a preset error range, the processor 150 may identify that the elevator 200 has arrived at the second floor.

Meanwhile, the processor 150 may also determine a compensation value of the pressure for identifying the altitude based on the pressure of the first floor identified using the pressure sensor and the altitude of the first floor included in the database 10. Subsequently, the processor 150 may apply the determined compensation value to the pressure of the stop floor identified using the pressure sensor, and identify the altitude of the stop floor based on the pressure of the stop floor to which the compensation value is applied.

Meanwhile, according to an embodiment, the processor 150 may also update the database 10 based on the pressure of the first floor identified using the pressure sensor. Specifically, the pressure of each floor identified using the pressure sensor may vary depending on time or occasion. Referring back to the example described above, even if the processor 150 identifies the pressure of the same floor using the pressure sensor, it may vary depending on the season, weather, time of day, or the like, or it may vary depending on the density of people in the elevator 200, or the like. Therefore, when the pressure of the first floor identified using the pressure sensor is different from the pressure of the first floor included in the database 10, the processor 150 may update the database 10 based the pressure of the first floor identified using the pressure sensor. In this case, the processor 150 may also update the pressure of the remaining floors not identified by the pressure sensor other than the first floor based on pressure difference between floors included in the database 10. In other words, the processor 150 may update the pressure of the remaining floors other than the first floor to expected pressure using the pressure of the first floor identified using the pressure sensor and the inter-floor pressure included in the database 10. Such an update of the database 10 may be performed at a preset interval.

In this case, according to an embodiment, when it is identified that the elevator 200 has arrived at the second floor, the processor 150 may identify whether the pressure of the second floor identified via the pressure sensor matches the pressure of the second floor included in the updated database 10 (which is the expected pressure of the second floor identified based on the pressure of the first floor), and when it is identified that the pressure of the second floor identified via the pressure sensor and the pressure of the second floor included in the updated database 10 do not match, may update the database 10 again based on the pressure of the second floor identified via the pressure sensor. In other words, the processor 150 may identify whether the expected pressure of each floor updated based on the initially measured pressure of the first floor matches the actual pressure of each floor measured via the sensor, and when it is identified that they do not match, may update the database 10 based on the actual pressure of each floor measured via the pressure sensor.

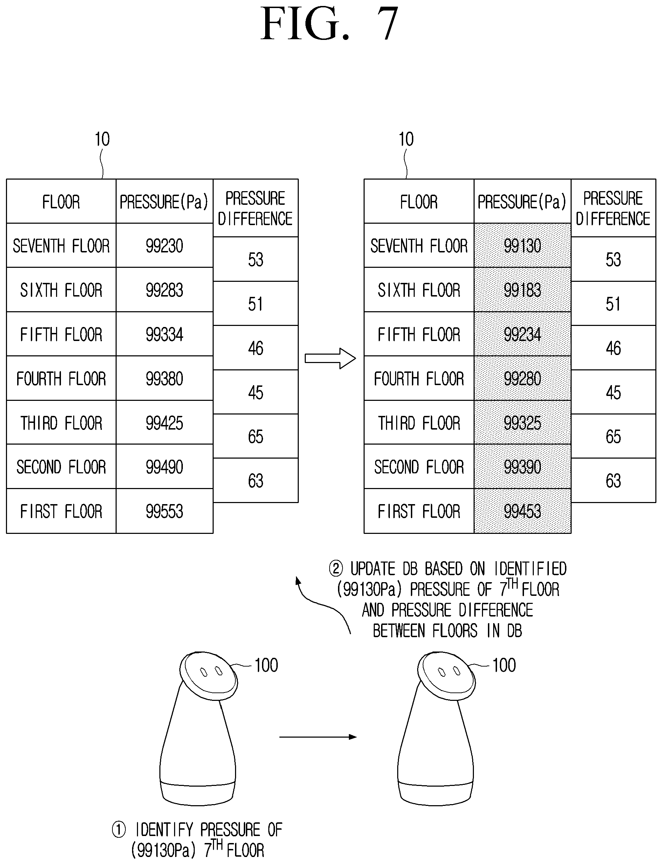

FIG. 7 is an exemplary view illustrating updating a database based on a pressure of a first floor according to an embodiment.

For example, referring to FIG. 7, when the processor 150 identifies the pressure of the seventh floor as 99130Pa using the pressure sensor, the processor 150 may identify that the pressure of the seventh floor of 99230Pa included in the database 10 and the pressure of the seventh floor of 99130Pa identified using the sensor are different. Accordingly, the processor 150 may update the pressure of the seventh floor of 99230Pa included in the database 10 to the pressure of the seventh floor of 99130Pa identified using the pressure sensor. The processor 150 may also update the pressure of the remaining floors other than the seventh floor based on the inter-floor pressure difference included in the database 10. In other words, the processor 150 may identify the expected pressure of the remaining floors based on the pressure of the seventh floor identified using the pressure sensor and the inter-floor pressure difference included in the database 10, and then update the pressure of each floor included in the database 10 based on the identified expected pressure.

In this case, when the processor 150 identifies that that the elevator 200 has arrived at the third floor based on the pressure identified using the acceleration sensor while the robot 100 is aboard the elevator 200 in response to a user input requesting that the robot 100 move from the seventh floor to the third floor, the robot 100 may compare the pressure of the third floor identified using the pressure sensor to the pressure of the third floor (the expected pressure) included in the database 10. When the pressure of the third floor identified using the pressure sensor is 99326Pa, the processor 150 may update the pressure of the third floor included in the database 10 again. In other words, the processor 150 may update the pressure of the third floor included in the database 10 from 99325Pa to 99326Pa.

In this case, when the database 10 is updated on a daily basis, the processor 150 may update the pressure of the third floor included in the database 10 and then identify whether the elevator 200 has arrived at the third floor on the corresponding day based on the updated pressure of the third floor. In other words, the processor 150 may identify whether the elevator 200 has arrived at the third floor by only comparing the pressure obtained by the pressure sensor with the pressure of the third floor included in the updated database 10 without using the pressure of the boarding floor of the robot 100 (i.e., the pressure of the first floor) and the pressure difference between floors.

As such, by periodically updating the database 10 based on the pressure of each floor identified using the pressure sensor, which is changed depending on time, season, environment, etc., when communication with the elevator 200 is cut off while the robot 100 is aboard the elevator 200, the processor 150 may control the robot 100 to exit exactly at the drop-off floor using the updated database 10.

Meanwhile, according to an embodiment, when communication with the elevator 200 is not possible while the robot 100 is aboard the elevator 200, if the elevator has moved and stopped, the processor 150 may identify an inter-floor travel distance between the first floor and the floor at which the elevator 200 stopped using the acceleration sensor, and identify the altitude of the stop floor based on the identified inter-floor travel distance. Subsequently, based on the identified altitude and information regarding the altitude of each floor included in the database 10, the processor 150 may identify whether the elevator 200 has arrived at the second floor.

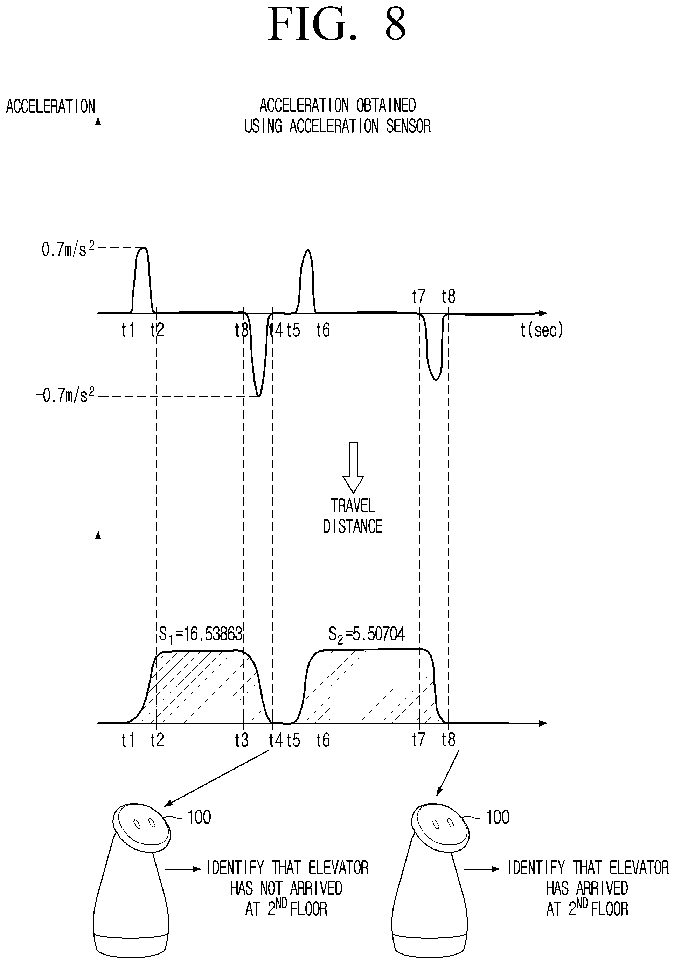

FIG. 8 is an exemplary view illustrating identifying whether an elevator has arrived at a second floor using an acceleration sensor according to an embodiment.

Specifically, the processor 150 may identify the amount of change in acceleration using the acceleration sensor from the time when the elevator starts moving after the robot 100 boards the elevator 200 at the first floor to the time when the elevator 200 stops. The processor 150 may then identify a travel distance of the elevator 200 corresponding to the identified amount of change in acceleration. In this case, the processor 150 may identify the travel distance between the first and second floors based on the inter-floor travel distance included in the database 10. When the travel distance identified using the acceleration sensor matches the travel distance between the first and second floors identified based on the database 10 or has an error within a preset error range, the processor 150 may also identify that the elevator 200 has arrived at the second floor. However, when the travel distance identified using the acceleration sensor does not match the travel distance between the first and second floors identified based on the database 10, or has an error outside of a preset error range, the processor 150 may identify that the elevator 200 has not arrived at the second floor. In such cases, the processor 150 may determine that the robot 100 does not exit the elevator 200. The processor 150 may identify the amount of change in acceleration from the time when the stopped elevator 200 moves again to the time when the elevator stops again using the acceleration sensor, and may identify a travel distance of the elevator 200 corresponding to the identified amount of change in acceleration. The processor 150 may then sum the identified travel distance and the previously identified travel distance to identify a total travel distance of the elevator 200. Subsequently, the processor 150 may identify whether the elevator 200 has arrived at the second floor by comparing the total travel distance with the travel distance between the first and second floors identified based on the database 10.

In one example, referring to FIGS. 4 and 8, when the processor 150 receives a user input requesting that the robot 100 located on the seventh floor move to the second floor, the processor 150 may control the driving unit 120 to allow the robot 100 on the seventh floor to board the elevator 200. After the robot 100 boards the elevator 200 at the seventh floor, the processor 150 may identify the amount of change in acceleration from t1, the time when the elevator 200 first starts moving, to t4, the time when the elevator 200 stops. Then, the processor 150 may identify a travel distance corresponding to the identified amount of change in acceleration from t1 to t4. In this case, when it is identified that the travel distance S1 corresponding to the amount of change in acceleration identified from t1 to t4 is 16.53863m, the processor 150 may identify that it is different from the travel distance between the seventh floor and the second floor (i.e., the difference in altitude between the seventh floor and the second floor) of 22.04567m identified based on the database 10. Accordingly, the processor 150 may identify that the elevator 200 has not arrived at the second floor. In this case, the processor 150 may determine that the robot 100 does not exit the elevator 200 and continues to wait.

The processor 150 may identify the amount of change in acceleration from t5, the time when the elevator 200 that stopped at t4 starts moving again, to t8, the time when the elevator 200 stops. Then, the processor 150 may identify a travel distance corresponding to the identified amount of change in acceleration from t5 to t8. In this case, when it is identified that the travel distance S2 corresponding to the identified amount of change in acceleration from t5 to t8 is 5.50704m, the processor 150 may identify a total travel distance of the elevator 200 from t1 to t8 by summing the travel distance S1 of the elevator 200 from t1 to t4. In this case, as it is identified that the travel distance (S1 + S2) of the elevator 200 from t1 to t8 is 22.04567m, the processor 150 may identify that the travel distance of the elevator 200 matches the travel distance between the seventh floor and the second floor (i.e., the difference in altitude between the seventh floor and the second floor) identified based on the database 10, which is 22.04567m. Accordingly, the processor 150 may identify that the elevator 200 has arrived at the second floor.

As such, the processor 150 may identify whether the elevator 200 has arrived at the drop-off floor set for the robot 100 using only the acceleration sensor.

Meanwhile, the processor 150 may identify whether the elevator 200 has arrived at the second floor using pressure sensor and the acceleration sensor together. In other words, the processor 150 may identify whether the elevator 200 has arrived at the drop-off floor set for the robot 100 more accurately by applying the embodiment which identifies whether the elevator 200 has arrived at the second floor as described above.

Meanwhile, when it is identified that communication with the elevator 200 is possible while the robot 100 is aboard the elevator 200, the processor 150 may receive information regarding the stop floor of the elevator 200 from the elevator 200 and then, identify whether the elevator 200 has arrived at the second floor based on the received information regarding the stop floor. In this case, the processor 150 may identify the pressure of the second floor using the pressure sensor and then, update the database 10 based on the identified pressure of the second floor. In other words, the processor 150 may compare the pressure of the second floor identified using the pressure sensor to the pressure of the second floor included in the database 10, and when it is identified that the pressure of the second floor identified using the pressure sensor and the pressure of the second floor included in the database 10 do not match, the processor 150 may update the database 10 based on the pressure of the second floor identified using the pressure sensor.

As such, the processor 150 may measure the pressure of each floor using the pressure sensor each time the elevator 200 travels between floors using the elevator 200, compare the measured pressure to the pressure of each floor included in the database 10, and iteratively update the database 10 based on the results of the comparison.

Meanwhile, according to an embodiment, when it is identified that the elevator 200 has arrived at the second floor, the processor 150 may control the driving unit 120 to allow the robot 100 to exit the elevator 200. Specifically, when it is identified that the elevator 200 has arrived at the second floor, the processor 150 may control the driving unit 120 to adjust the posture of the robot 100 such that the robot 100 faces the door of the elevator 200. Subsequently, when it is identified that the door of the elevator 200 is open, the processor 150 may control the driving unit 120 to allow the robot 100 to exit the elevator 200. In this case, the processor 150 may use a lidar sensor (not shown), a time-of-flight sensor, or the like to identify that the door of the elevator 200 is open.

Meanwhile, according to an embodiment, when it is identified that the elevator 200 has arrived at the second floor, the processor 150 may identify the pressure inside the elevator 200 using the pressure sensor, and when the pressure identified at the second point in time is less than the pressure identified at the first point in time before the second point in time by a preset value, the processor 150 may identify that the door of the elevator 200 is open at the second point in time.

Specifically, the processor 150 may identify that the elevator 200 has arrived at the second floor based on the pressure measured while the robot 100 is aboard the elevator 200. In this case, the processor 150 may identify that the stop floor of the elevator 200 corresponds to the second floor, and may continue to measure the pressure of the second floor to observe the amount of change in pressure of the second floor. Further, the pressure of the second floor within the elevator 200 may change as the door is opened. In other words, the pressure of the second floor identified while the door of the elevator 200 is open may be less than the pressure of the second floor identified while the door of the elevator 200 is closed. In one example, the pressure identified while the door of the elevator 200 is open may be lower by 4Pa than the pressure identified while the door of the elevator 200 is closed. In this case, when the pressure of the second floor is reduced by a preset value, the processor 150 may identify that the door of the elevator 200 is open. Subsequently, the processor 150 may control the driving unit 120 to allow the robot 100 to exit the elevator 200. Accordingly, the processor 150 may allow the robot 100 to exit stably without colliding with the door of the elevator 200.

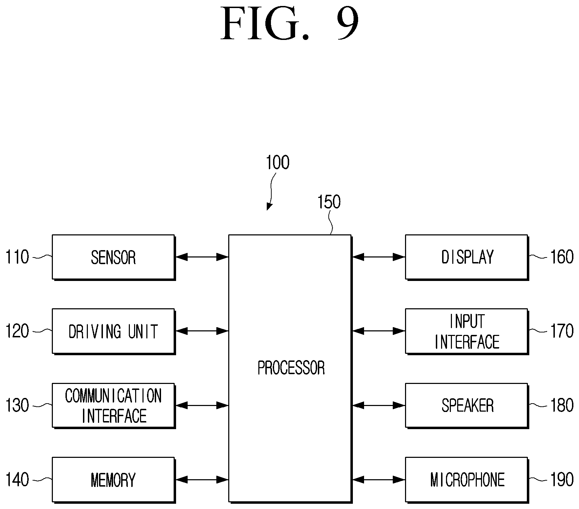

FIG. 9 is a detailed block diagram illustrating a robot according to an embodiment.

Referring to FIG. 9, the robot 100 includes the sensor 110, the driving unit 120, the communication interface 130, the memory 140, a display 160, an input interface 170, a speaker 180, a microphone 190, and the processor 150. The configurations shown in FIG. 9 that are duplicative of the configurations shown in FIG. 2 will not be described in detail.

The sensor 110 may include a pressure sensor and an acceleration sensor. The pressure sensor may identify the pressure around the robot 100. The acceleration sensor may identify the acceleration of the robot 100. Meanwhile, the sensor 110 includes a lidar sensor, a time-of-flight sensor, etc., and may obtain information regarding objects around the robot 100.

The display 160 may display various visual information. For example, the display 160 may display various information regarding map data, a driving path of the robot 100, a drop-off floor set for the robot 100, and the like.

To this end, the display 160 may be implemented as a display including a selfluminous element or a display including a non-luminous element and a backlight. For example, the display 160 may be implemented as various types of displays such as a Liquid Crystal Display (LCD), an Organic Light Emitting Diodes (OLED) display, a Light Emitting Diodes (LED), a micro LED, a Mini LED, a Plasma Display Panel (PDP), a Quantum dot (QD) display, a Quantum dot light-emitting diodes (QLED), etc.

The display 160 may also include a driving circuit, a backlight unit, and the like, which may be implemented in the form of a-si TFTs, low temperature poly silicon (LTPS) TFTs, organic TFTs (OTFTs), and the like. Meanwhile, the display 160 may be implemented as the touch screen combined with the touch sensor, a flexible display, a rollable display, a three-dimensional (3D) display, a display in which a plurality of display modules are physically connected.

Meanwhile, when the display 160 is implemented as a touch screen, the display 160 may function as an output unit that outputs information between the robot 100 and the user, and at the same time, may function as an input unit that provides the input interface 170 between the robot 100 and the user. For example, the display 160 may receive a user input to move the robot 100 to the second floor.

The input interface 170 is a configuration used by the robot 100 to perform an interaction with a user, and the processor 150 may receive various information via the input interface 170, such as control information for the robot 100, information regarding the space 1000 in which the robot 100 is located (e.g., map data for the space 1000, etc.), and the like. In one example, the processor 150 may receive a user input to move the robot 100 to the second floor via the input interface 170. The input interface 170 may include, but is not limited to, at least one of a touch sensor, a motion sensor, a button, a jog dial, or a switch.

The speaker 180 may output acoustic signals to the outside of the robot 100. The speaker 180 may output multimedia playback, recording playback, various notification sounds, voice messages, etc. The robot 100 may include an audio output device such as the speaker 180, but may also include an output device such as an audio output terminal. In particular, the speaker 180 may provide obtained information, information processed or produced based on the obtained information, a response result to a user voice, or an operation result in the form of a voice. In one example, the processor 150 may output a warning sound via the speaker 180 if the robot 100 aboard the elevator 200 fails to exit within a preset time period.

The microphone 190 may receive acoustic signals from the surroundings of the robot 100. In one example, the microphone 190 may receive a user voice controlling the robot 100. Here, the user voice may be a user voice to move the robot 100 to the second floor.

When a user voice to execute a specific function is received via the microphone 190, processor 150 may convert the user voice into a digital signal via a speech to text (STT) algorithm, and provide response information corresponding to the user voice.

Hereinafter, a method for controlling the robot 100 located within the space 1000 consisting of a plurality of floors according to an embodiment will be described.

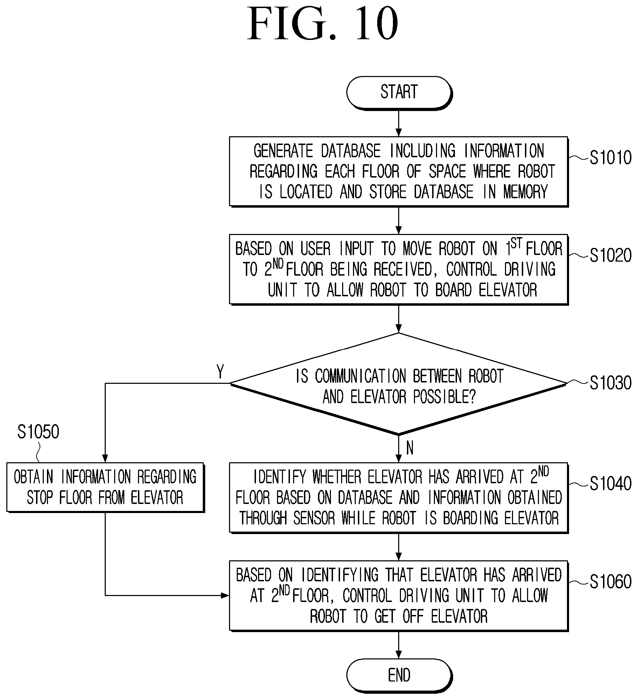

FIG. 10 is a flowchart schematically illustrating a method for controlling a robot in a space consisting of a plurality of floors according to an embodiment.

A method of controlling the robot 100 located within the space 1000 consisting of a plurality of floors according to an embodiment may include the a step in which the processor 150 generates the database 10 including information regarding each floor of the space 1000 where the robot 100 is located and stores it in the memory 140 (not shown) and a step in which the processor 150 controls the driving unit 120 of the robot 100 to allow the robot 100 to move through the space 1000 based on the database 10 stored in the memory 140.

Step S1010 shown in FIG. 10 may correspond to the above-described step in which the processor 150 generates the database 10 including information regarding each floor of the space 1000 where the robot 100 is located and stores it in the memory 140 (not shown).

According to an embodiment, in step S1010, the processor 150 may obtain the pressure of each floor at which the elevator 200 where the robot 100 is aboard has stopped using a pressure sensor, and obtain information regarding a difference in pressure between floors and an altitude of each floor based on the obtained pressure. Subsequently, the processor 150 may generate and store in the memory 140 a database 10 that includes information regarding the obtained pressure of each floor, difference in pressure between floors, and altitude of each floor.

Further, according to an embodiment, in step S1010, the processor 150 may obtain information regarding an inter-floor travel distance of the robot 100 using an acceleration sensor, obtain information regarding the altitude of each floor based on the obtained inter-floor travel distance, and generate and store in the memory 140 the database 10 including the obtained information regarding the altitude of each floor.

Meanwhile, referring to FIG. 10, the step (not shown) of controlling the driving unit 120 of the robot 100 to move through the space 1000 based on the database 10 stored in the memory 140 according to an embodiment includes, when a user input to move the robot 100 located on the first floor to the second floor is received, controlling the driving unit 120 to allow the robot 100 to board the elevator 200 (S1020), identifying whether communication between the robot 100 and the elevator 200 is possible while the robot 100 is aboard the elevator 200 (S1030), when it is identified that the communication with the elevator 200 is not possible (S1030-N), identifying whether the elevator 200 has arrived at the second floor based on the database 10 and information obtained through the sensor 110 while the robot 100 is aboard the elevator 200 (S1040), when it is identified that the communication with the elevator 200 is possible (S1030-Y), obtaining information regarding the stop floor from the elevator (S1050), and when it is identified that the elevator 200 has arrived at the second floor, controlling the driving unit 120 to allow the robot 100 to exit the elevator 200 (S1060).

Here, the first floor may refer to the boarding floor where the robot 100 receiving the user input is located, and the second floor may refer to the drop-off floor where the robot 100 is set to move based on the user input.

Meanwhile, when using a pressure sensor included in the sensor 110, the processor 150 may identify the pressure of the first floor using the pressure sensor while the robot 100 is located on the first floor. In this case, when it is identified that communication with the elevator 200 is not possible while the robot 100 is aboard the elevator 200, the processor 150 may identify the expected pressure of the second floor based on the difference in pressure between floors included in the database 10 and the identified pressure of the first floor. Subsequently, when the elevator 200 moves and stops, the processor 150 may identify the pressure of the floor at which the elevator 200 has stopped using the pressure sensor. The processor 150 may identify whether the elevator 200 has arrived at the second floor based on the identified expected pressure of the second floor and the identified pressure of the stop floor.

In addition, when using the pressure sensor included in the sensor 110, if it is identified that the communication with the elevator 200 is not possible while the robot 100 is aboard the elevator 200, after the elevator 200 moves and stops, the processor 150 may identify the pressure of the stop floor at which the elevator 200 has stopped using the pressure sensor, and identify the altitude of the stop floor based on the identified pressure of the stop floor. Subsequently, the processor 150 may identify whether the elevator 200 has arrived at the second floor based on the identified altitude and information regarding the altitude of each floor included in the database 10.

Further, when using an acceleration sensor included in the sensor 110, if it is identified that the communication with the elevator 200 is not possible while the robot 100 is aboard the elevator 200, after the elevator 200 moves and stops, the processor 150 may identify an inter-floor travel distance between the first floor and the stop floor at which the elevator 200 has stopped using the acceleration sensor, and identify the altitude of the stop floor based on the identified inter-floor travel distance. Subsequently, the processor 150 may identify whether the elevator 200 has arrived at the second floor based on the identified altitude and information regarding the altitude of each floor included in the database 10.

Meanwhile, a method of controlling the robot 100 located within the space 1000 consisting of a plurality of floors according to an embodiment may further include, when it is identified that the elevator 200 has arrived at the second floor, identifying the pressure within the elevator 200 using a pressure sensor included in the sensor 110, and when the pressure identified at the second point in time is less than the pressure identified at the first point in time by a preset value, identifying that the door of the elevator 200 is open at the second point in time.

The methods according to various embodiments of the present disclosure described above may be implemented in the form of applications that can be installed on the existing robot. Alternatively, the methods according to the above-described various embodiments may be performed using a neural network trained based on deep learning (or deep learned neural network), that is, a learning network model. Alternatively, the methods according to the above-described various embodiments may be implemented only by software upgrade or hardware upgrade of the robot. Alternatively, the above-described various embodiments may be performed through an embedded server included in the robot or an external server of the robot.

Meanwhile, according to an embodiment, the above-described various embodiments may be implemented as software including instructions stored in machine-readable storage media, which can be read by machine (e.g.: computer). The machine refers to a device that calls instructions stored in a storage medium, and can operate according to the called instructions, and the device may include a display device (e.g., display device A) according to the aforementioned embodiments. In case an instruction is executed by a processor, the processor may perform a function corresponding to the instruction by itself, or by using other components under its control. The instruction may include a code that is generated or executed by a compiler or an interpreter. The machine-readable storage medium may be provided in the form of a non-transitory storage medium. Here, the term 'non-transitory' means that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser.

The computer program product may be distributed in a form of a storage medium (e.g., a compact disc read only memory (CD-ROM)) that may be read by the machine or online through an application store (e.g., PlayStore™). In case of the online distribution, at least a portion of the computer program product may be at least temporarily stored in a storage medium such as a memory of a server of a manufacturer, a server of an application store, or a relay server or be temporarily generated.

The components (e,g., modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the various embodiments may be executed in a sequential manner, a parallel manner, an iterative manner, or a heuristic manner, or at least some of the operations may be performed in a different order or be omitted, or other operations may be added.

Hereinabove, the embodiments of the disclosure have been described, but the disclosure is not limited to the specific embodiment described above and may be variously modified by a person skilled in the art to which the disclosure pertains without departing from the scope of the disclosure as claimed herein, and such modifications should not be individually understood from technical concepts or prospects of the disclosure.

**Claims**

1. A robot comprising:

    a sensor;
    a driving unit;
    a communication interface;
    memory storing a database including information regarding each floor of a space where the robot is located; and
    one or more processors configured to:

    based on a user input to move the robot on a first floor to a second floor being received, control the driving unit to allow the robot to board an elevator; and
    based on communication with the elevator being not possible while the robot is aboard the elevator in response to the user input, identify whether the elevator has arrived at the second elevator based on the database and information obtained through the sensor while the robot is aboard the elevator,

and based on identifying that the elevator has arrived at the second floor, control the driving unit to allow the robot to move to exit the elevator,
wherein the processor is configured to, based on the elevator where the robot is aboard being stopped, generate a database including the information regarding each floor of the space based on information regarding each floor obtained thorough the sensor and store the database in the memory.

2. The robot as claimed in claim 1, wherein the sensor includes at least one of a pressure sensor or an acceleration sensor.

3. The robot as claimed in claim 2, wherein the one or more processors are configured to:

    obtain a pressure of each floor at which the elevator where the robot is aboard has stopped using the pressure sensor, and obtain information regarding a difference in pressure between floors and an altitude of the each floor based on the obtained pressure; and
    generate the database including the obtained pressure of each floor, difference in pressure between floors and altitude of the each floor.

4. The robot as claimed in claim 2, wherein the one or more processors are configured to:

    obtain information regarding an inter-floor travel distance of the robot using the acceleration sensor, and obtain information regarding an altitude of the each floor based on the obtained information regarding an inter-floor travel distance; and
    generate the database including the obtained information regarding an altitude of each floor.

5. The robot as claimed in claim 2, wherein the one or more processors are configured to:

    identify a pressure of the first floor using the pressure sensor while the robot is located on the first floor;
    based on communication with the elevator being not possible while the robot is aboard the elevator, identify an expected pressure of the second floor based on a difference in pressure between floors included in the database and the identified pressure of the first floor;
    based on the elevator being moved and stopped, identify a pressure of a floor at which the elevator has stopped using the pressure sensor; and

identify whether the elevator has arrived at the second floor based on the identified expected pressure of the second floor and the identified pressure of the stop floor.

6. The robot as claimed in claim 2, wherein the one or more processors are configured to:

identify a pressure of the first floor using the pressure sensor while the robot is located on the first floor;
based on communication with the elevator being not possible while the robot is aboard the elevator, in response to the elevator being moved and stopped, identify a pressure of a floor at which the elevator has stopped using the pressure sensor;
identify an altitude of the stop floor based on the identified pressure of the stop floor; and
identify whether the elevator has arrived at the second floor based on the identified altitude and information regarding an altitude of each floor included in the database.

7. The robot as claimed in claim 2, wherein the one or more processors are configured to:

based on communication with the elevator being not possible while the robot is aboard the elevator, in response to the elevator being moved and stopped, identify an inter-floor travel distance between the first floor and a floor at which the elevator has stopped using the acceleration sensor;
identify an altitude of the stop floor based on the identified inter-floor travel distance; and
identify whether the elevator has arrived at the second floor based on the identified altitude and information regarding an altitude of each floor included in the database.

8. The robot as claimed in claim 1, wherein the sensor includes a pressure sensor; and
wherein the one or more processors are configured to:
based on identifying that the elevator has arrived at the second floor, identify a pressure within the elevator using the pressure sensor, and based on a pressure identified at a second point in time being less than a pressure identified at a first point in time prior to the second point in time by a preset value, identify that a door of the elevator is opened at the second point in time.

9. A controlling method of a robot located within a space consisting of a plurality of floors, the method comprising:

generating a database including information regarding each floor of a space based on information regarding each floor obtained through a sensor of a robot and storing the database in memory of the robot; and
controlling a driving unit of the robot to move through the space based on the database stored in the memory,
wherein the controlling a driving unit comprises:

based on a user input to move the robot on a first floor to a second floor being received, controlling the driving unit to allow the elevator to board an elevator;
identifying whether communication with the elevator is possible while the robot is aboard the elevator in response to the user input;
based on identifying that communication with the elevator is not possible, identifying whether the elevator has arrived at the second elevator based on the database and information obtained through the sensor while the robot is aboard the elevator; and
based on identifying that the elevator has arrived at the second floor, controlling the driving unit to allow the robot to move to exit the elevator.

10. The method as claimed in claim 9, wherein the sensor includes at least one of a pressure sensor or an acceleration sensor.

11. The method as claimed in claim 10, wherein the storing comprises:

obtaining a pressure of each floor at which the elevator where the robot is aboard has stopped using the pressure sensor, and obtaining information regarding a difference in pressure between floors and an altitude of the each floor based on the obtained pressure; and
generating the database including the obtained pressure of each floor, difference in pressure between floors and altitude of the each floor.

12. The method as claimed in claim 10, wherein the storing comprises:

obtaining information regarding an inter-floor travel distance of the robot using the acceleration sensor, and obtaining information regarding an altitude of the each floor based on the obtained information regarding an inter-floor travel distance; and
generating the database including the obtained information regarding an altitude of each floor.

13. The method as claimed in claim 10, further comprising:

identifying a pressure of the first floor using the pressure sensor while the robot is located on the first floor,

wherein the identifying whether the elevator has arrived at the second floor comprises:

based on communication with the elevator being not possible while the robot is aboard the elevator, identifying an expected pressure of the second floor based on a difference in pressure between floors included in the database and the identified pressure of the first floor;

based on the elevator being moved and stopped, identifying a pressure of a floor at which the elevator has stopped using the pressure sensor; and

identifying whether the elevator has arrived at the second floor based on the identified expected pressure of the second floor and the identified pressure of the stop floor.

14. The method as claimed in claim 10, wherein the identifying whether the elevator has arrived at the second floor comprises:

based on communication with the elevator being not possible while the robot is aboard the elevator, in response to the elevator being moved and stopped, identifying a pressure of a floor at which the elevator has stopped using the pressure sensor;

identifying an altitude of the stop floor based on the identified pressure of the stop floor; and

identifying whether the elevator has arrived at the second floor based on the identified altitude and information regarding an altitude of each floor included in the database.

15. A non-transitory computer-readable recording medium storing computer instructions that, when executed by a processor of a robot, cause the robot to:

generate a database including information regarding each floor of a space based on information regarding each floor obtained through a sensor of a robot and store the database in memory of the robot; and

control a driving unit of the robot to move through the space based on the database stored in the memory,

wherein the controlling a driving unit comprises:

based on a user input to move the robot on a first floor to a second floor being received, controlling the driving unit to allow the elevator to board an elevator;

identifying whether communication with the elevator is possible while the robot is aboard the elevator in response to the user input;

based on identifying that communication with the elevator is not possible, identifying whether the elevator has arrived at the second elevator based on the database and information obtained through the sensor while the robot is aboard the elevator; and

based on identifying that the elevator has arrived at the second floor, controlling the driving unit to allow the robot to move to exit the elevator.

# FIG. 1

# FIG. 2

# FIG. 3

| FLOOR | PRESSURE(Pa) | ALTITUDE(m) |
|---|---|---|
| ⋮ | ⋮ | ⋮ |
| SIXTH FLOOR | 99283 | 64.02974 |
| ⋮ | ⋮ | ⋮ |
| FIRST FLOOR | 99553 | 41.14697 |

# FIG. 4

10

| FLOOR | PRESSURE(Pa) | ALTITUDE(m) | PRESSURE DIFFERENCE |
|---|---|---|---|
| SEVENTH FLOOR | 99230 | 68.52746 | 53 |
| SIXTH FLOOR | 99283 | 64.02974 | 51 |
| FIFTH FLOOR | 99334 | 59.70358 | 46 |
| FOURTH FLOOR | 99380 | 55.8031 | 45 |
| THIRD FLOOR | 99425 | 51.98883 | 65 |
| SECOND FLOOR | 99490 | 46.48179 | 63 |
| FIRST FLOOR | 99553 | 41.14697 | |

140

# FIG. 5

| FLOOR | PRESSURE DIFFERENCE |
|---|---|
| SEVENTH FLOOR | 53 |
| SIXTH FLOOR | 51 |
| FIFTH FLOOR | 46 |
| FOURTH FLOOR | 45 |
| THIRD FLOOR | 65 |
| SECOND FLOOR | 63 |
| FIRST FLOOR | |

10

③ IDENTIFY EXPECTED
PRESSURE OF
(99390Pa)
2$^{ND}$ FLOOR

① RECEIVE USER INPUT
TO MOVE FROM
7$^{TH}$ FLOOR TO 2$^{ND}$ FLOOR

100    100    100

② IDENTIFY PRESSURE OF
(99130Pa) 7$^{TH}$ FLOOR

# FIG. 6

PRESSURE MEASURED USING PRESSURE SENSOR

IDENTIFY THAT ELEVATOR
HAS NOT ARRIVED
AT 2$^{ND}$ FLOOR

IDENTIFY THAT ELEVATOR
HAS ARRIVED
AT 2$^{ND}$ FLOOR

# FIG. 7

10

| FLOOR | PRESSURE(Pa) | PRESSURE DIFFERENCE |
|---|---|---|
| SEVENTH FLOOR | 99230 | |
| | | 53 |
| SIXTH FLOOR | 99283 | |
| | | 51 |
| FIFTH FLOOR | 99334 | |
| | | 46 |
| FOURTH FLOOR | 99380 | |
| | | 45 |
| THIRD FLOOR | 99425 | |
| | | 65 |
| SECOND FLOOR | 99490 | |
| | | 63 |
| FIRST FLOOR | 99553 | |

⇒

10

| FLOOR | PRESSURE(Pa) | PRESSURE DIFFERENCE |
|---|---|---|
| SEVENTH FLOOR | 99130 | |
| | | 53 |
| SIXTH FLOOR | 99183 | |
| | | 51 |
| FIFTH FLOOR | 99234 | |
| | | 46 |
| FOURTH FLOOR | 99280 | |
| | | 45 |
| THIRD FLOOR | 99325 | |
| | | 65 |
| SECOND FLOOR | 99390 | |
| | | 63 |
| FIRST FLOOR | 99453 | |

② UPDATE DB BASED ON IDENTIFIED (99130Pa) PRESSURE OF 7$^{TH}$ FLOOR AND PRESSURE DIFFERENCE BETWEEN FLOORS IN DB

~100

~100

① IDENTIFY PRESSURE OF (99130Pa) 7$^{TH}$ FLOOR

# FIG. 8

ACCELERATION

ACCELERATION OBTAINED
USING ACCELERATION SENSOR

$0.7m/s^2$

$-0.7m/s^2$

t1 t2    t3  t4 t5 t6    t7 t8    t(sec)

TRAVEL
DISTANCE

$S_1=16.53863$

$S_2=5.50704$

t1 t2    t3  t4 t5 t6    t7 t8

~100

IDENTIFY THAT ELEVATOR
HAS NOT ARRIVED
AT $2^{ND}$ FLOOR

~100

IDENTIFY THAT ELEVATOR
HAS ARRIVED
AT $2^{ND}$ FLOOR

# FIG. 9

# FIG. 10

START

GENERATE DATABASE INCLUDING INFORMATION REGARDING EACH FLOOR OF SPACE WHERE ROBOT IS LOCATED AND STORE DATABASE IN MEMORY — S1010

BASED ON USER INPUT TO MOVE ROBOT ON $1^{ST}$ FLOOR TO $2^{ND}$ FLOOR BEING RECEIVED, CONTROL DRIVING UNIT TO ALLOW ROBOT TO BOARD ELEVATOR — S1020

IS COMMUNICATION BETWEEN ROBOT AND ELEVATOR POSSIBLE? — S1030

Y

N

S1050

OBTAIN INFORMATION REGARDING STOP FLOOR FROM ELEVATOR

IDENTIFY WHETHER ELEVATOR HAS ARRIVED AT $2^{ND}$ FLOOR BASED ON DATABASE AND INFORMATION OBTAINED THROUGH SENSOR WHILE ROBOT IS BOARDING ELEVATOR — S1040

BASED ON IDENTIFYING THAT ELEVATOR HAS ARRIVED AT $2^{ND}$ FLOOR, CONTROL DRIVING UNIT TO ALLOW ROBOT TO GET OFF ELEVATOR — S1060

END

## INTERNATIONAL SEARCH REPORT

| International application No. |
| --- |
| **PCT/KR2023/011763** |

**A.    CLASSIFICATION OF SUBJECT MATTER**

**B25J 9/16**(2006.01)i; **B25J 5/00**(2006.01)i; **B25J 13/00**(2006.01)i; **B25J 13/08**(2006.01)i; **B25J 19/02**(2006.01)i; **B66B 1/34**(2006.01)i

According to International Patent Classification (IPC) or to both national classification and IPC

**B.    FIELDS SEARCHED**

Minimum documentation searched (classification system followed by classification symbols)

B25J 9/16(2006.01); B25J 11/00(2006.01); B66B 3/00(2006.01); G05D 1/00(2006.01); G06Q 10/08(2012.01); H04Q 9/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 엘리베이터(elevator), 기압(atmospheric pressure), 가속도(acceleration), 고도(altitude), 층(floor), 데이터베이스(database)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2305043 B1 (FOLLETTO ROBOTICS CO., LTD.) 24 September 2021 (2021-09-24) See paragraphs [0042]-[0045], [0050], [0051], [0053], [0060] and [0069] and figures 2 and 3. | 1-7,9-15 |
| A | | 8 |
| Y | KR 10-2022-0084991 A (NAVER LABS CORPORATION) 21 June 2022 (2022-06-21) See paragraphs [0033], [0039], [0059], [0061] and [0062] and figure 2. | 1-7,9-15 |
| Y | KR 10-2015-0015575 A (KOREA INSTITUTE OF ROBOT & CONVERGENCE) 11 February 2015 (2015-02-11) See paragraphs [0045]-[0048] and [0050]. | 3,5-6,11,13-14 |
| Y | JP 2019-507713 A (TENCENT TECHNOLOGY (SHENZHEN) COMPANY LIMITED) 22 March 2019 (2019-03-22) See paragraphs [0011], [0012], [0030] and [0042] and figures 1 and 2. | 4,7,12 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 November 2023** | **16 November 2023** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011763** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2021-0046650 A1 (COBALT ROBOTICS INC.) 18 February 2021 (2021-02-18)<br>See paragraph [0328] and claim 10. | 1-15 |

## INTERNATIONAL SEARCH REPORT
### Information on patent family members

International application No.

**PCT/KR2023/011763**

| Patent document cited in search report | | | Publication date (day/month/year) | Patent family member(s) | | | Publication date (day/month/year) |
|---|---|---|---|---|---|---|---|
| KR | 10-2305043 | B1 | 24 September 2021 | None | | | |
| KR | 10-2022-0084991 | A | 21 June 2022 | KR | 10-2022-0084721 | A | 21 June 2022 |
| | | | | KR | 10-2478666 | B1 | 16 December 2022 |
| | | | | KR | 10-2478667 | B1 | 15 December 2022 |
| KR | 10-2015-0015575 | A | 11 February 2015 | KR | 10-1523268 | B1 | 28 May 2015 |
| JP | 2019-507713 | A | 22 March 2019 | CN | 107344688 | A | 14 November 2017 |
| | | | | CN | 107344688 | B | 14 May 2019 |
| | | | | EP | 3453663 | A1 | 13 March 2019 |
| | | | | EP | 3453663 | B1 | 28 December 2022 |
| | | | | JP | 6885938 | B2 | 16 June 2021 |
| | | | | KR | 10-2018-0075598 | A | 04 July 2018 |
| | | | | KR | 10-2277339 | B1 | 13 July 2021 |
| | | | | US | 11242219 | B2 | 08 February 2022 |
| | | | | US | 2019-0031469 | A1 | 31 January 2019 |
| | | | | WO | 2017-190666 | A1 | 09 November 2017 |
| US | 2021-0046650 | A1 | 18 February 2021 | US | 11209832 | B2 | 28 December 2021 |
| | | | | US | 2022-075386 | A1 | 10 March 2022 |

Form PCT/ISA/210 (patent family annex) (July 2022)